# EUROPÄISCHE PATENTSCHRIFT

(11) **EP 1 348 398 B1**
(45) Veröffentlichungstag und Bekanntmachung des Hinweises auf die Patenterteilung: **02.05.2007**
(21) Anmeldenummer: 03006387.9
(22) Anmeldetag: 20.03.2003
(51) Int. Cl.: A61C 13/00, A61C 9/00

(54) **Vorrichtung zur Halterung eines Modells eines Zahnkranzes mit zusammenhängendem Hülsenteil**
Holding device for a dental mould with related sleeve
Dispositif de support du modèle de l'empreinte dentaire avec gaine associe

(30) Priorität: 26.03.2002 DE 10213739
(43) Veröffentlichungstag der Anmeldung: 01.10.2003
(73) Patentinhaber: Bredent Dentalgeräte und Materialien Fach- und Organisationsberatung Peter Brehm, 89250 Senden (DE)
(72) Erfinder: Arzt, Uwe, Andreas, 53757 St. Augustin (DE)
(74) Vertreter: Dziewior, Joachim

(56) Entgegenhaltungen:
- DE-A- 1 914 244
- DE-A- 19 624 158
- FR-A- 2 684 541
- US-A- 4 203 219

## Beschreibung

Die vorliegende Erfindung betrifft eine Vorrichtung gemäß dem Oberbegriff des Anspruchs 1.

Eine gattungsgemäße Vorrichtung ist aus der FR 2684541 bekannt. Weiter ist aus der DE-OS-3716143 ein Sockel zur Halterung eines Gipsmodells eines Zahnkranzes bekannt, bei der der Sockel aus Metall ist, der auf seiner Oberseite mehrere von im Abstand nebeneinander stehende, konisch ausgebildete Stifte als Führungselemente aufweist. Nachteilig bei diesem Sockel ist, dass für jedes Modell ein Sockel, der aus einem relativ teuren Material aufwendig gefertigt ist, benötigt wird, wodurch die Herstellungskosten für das Modell selbst sehr hoch sind. Aufgrund des verwendeten Materials kann der Sockel selbst nicht in seiner Form verändert werden. Es ist somit notwendig, für verschiedene Größen von Zahnkränzen verschieden große Sockel auf Vorrat zu halten.

Aus dem deutschen Gebrauchsmuster 7823914 U1 ist ebenfalls eine Vorrichtung zum Anfertigen eines Modells eines Zahnkranzes bekannt. Die Vorrichtung besteht aus einer Sockelplatte, die eine Vielzahl von Ausnehmungen aufweist, die mit konusförmigen Zapfen 12 einer Modellträgerplatte zusammenwirken. Die Modellträgerplatte wird mit ihren Zapfen in die Ausnehmungen der Sockelplatte eingesetzt. Die Modellträgerplatte weist darüber hinaus an ihrer Oberseite dicht zueinander angeordnete Ausnehmungen auf, die Hinterschneidungen aufweisen, derart, dass auf die Modellträgerplatte aufgegossener flüssiger Gips in die Ausnehmungen eintritt und durch die Hinterschneidungen der Ausnehmungen nach dem Erhärten der Gips fest an der Modellträgerplatte befestigt ist. Nachteilig bei diesem Modell ist, dass der Sockel mittels zusätzlichen Halterungsvorrichtungen an der Modellträgerplatte gehalten werden muss, und dass die Modellträgerplatte, bedingt durch die Hinterschneidungen ihrer Ausnehmungen, nur sehr schwierig und teuer herstellbar ist.

Aus der DE 4110672 ist ebenfalls eine Sockelvorrichtung zur Herstellung und Halterung eines Gipsmodells eines Zahnkranzes bekannt. Nachteilig bei dieser Sockelvorrichtung ist, dass die Basisplatte selbst den Sockel bildet, wodurch dieser nicht bei der Herstellung des Zahnkranzes, bzw. des Modells, selbst geformt, bzw. dessen Dicke bestimmt werden kann. Zudem wird, bedingt durch die Dicke der Basisplatte, zu dessen Herstellung relativ viel Kunststoff benötigt. Auch erfüllt diese Sockelvorrichtung nicht die hohen ästhetischen Anforderungen, die generell an zahntechnische Modelle gestellt werden, wobei hierbei eine Anforderung ist, dass der Sockel aus Gips ist, dessen Farbe durch Einfärben beliebig leicht variierbar ist. Dies ist mit der Sockelvorrichtung gemäß der DE 4110672 nicht möglich.

Aufgabe der vorliegenden Erfindung ist es daher, bei einer Vorrichtung, die die Möglichkeit bietet, ein Modell eines Zahnkranzes herzustellen, welches steckbar auf einem Sockel befestigbar ist, wobei gleichzeitig der Sockel für das Modell selbst von der das Modell herstellenden Person geformt werden kann bzw. herstellbar ist und gleichzeitig eine feste Verbindung zwischen Sockel und Steckverbindungssystem für das Modell des Zahnkranzes besteht, bei der üblichen Trennung des Zahnkranzes in einzelne Zähne sicherzustellen, daß sowohl die schmaleren Schneidezähne wie auch die breiteren Backenzähne trotz unterschiedlicher Größe gleichermaßen gut verankert sind.

Diese Aufgabe wird erfindungsgemäß mit einer Vorrichtung gemäß der Merkmale des Anspruchs 1 gelöst.
Weitere vorteilhafte Ausgestaltungen der erfindungsgemäßen Vorrichtung ergeben sich durch die Merkmale der Unteransprüche 2 bis 16. Ebenfalls wird ein Verfahren zur Herstellung eines zahntechnischen Modells eines Zahnkranzes unter Verwendung der erfindungsgemäßen Vorrichtung beansprucht. Vorteilhafte Ausgestaltungen dieses Verfahrens ergeben sich durch die Merkmale der Unteransprüche 17 bis 22. Ebenfalls wird Schutz für ein zahntechnisches Modell unter Verwendung der erfindungsgemäßen Vorrichtung beansprucht.

Die erfindungsgemäße Vorrichtung weist den Vorteil auf, dass im vorderen Bereich, welcher den vorderen Bereich des Zahnkranzes inkl. der Schneidezähne hält, kurze und dünne Führungselemente vorhanden sind, die enger beabstandet zueinander sind als die etwas längeren und im Durchmesser dickeren Führungselemente des hinteren Bereichs, welcher die Backenzähne des Zahnkranzes hält.

In einer bevorzugten Ausführungsform ist die Vorrichtung aus Kunststoff gefertigt, so dass sie selbst nachträglich mittels Schleifen oder Sägen leicht bearbeitbar ist, und somit in einem letzten Arbeitsgang das Modell entsprechend den Anforderungen getrimmt werden kann. Durch die vorteilhafte Verwendung von Hülsen, die vor dem Eindrücken der Vorrichtung in den Gipsabdruck auf die Führungselemente der Vorrichtung aufgesteckt werden, werden diese in der entsprechenden Position und passgenau im Gipsmodell des Zahnkranzes eingepasst. Durch das Vorsehen der Hülsen wird vorteilhaft ein Ausbrechen des Gipses und somit ein ungenauer Sitz der ausgesägten Teile des Zahnkranzes auf der Vorrichtung vermieden, so dass das erstellte Modell robust und daher lange verwendbar ist. Die Vorichtung ist bedingt durch das Anformen des Sockels nur einmal zu verwenden.

Vorteilhaft hat die Vorrichtung in etwa die Form eines Unterkiefers oder Oberkiefers, so dass anschließend relativ wenig von der Vorrichtung selbst weggeschliffen, bzw. weggesägt werden muss. Dieser letzte Arbeitsschritt wird idR als Trimmvorgang bezeichnet.

Die Vorrichtung weist weiterhin vorteilhaft eine äußere Umrandung auf, die verhindert, dass beim Gießen des Zahnkranzes der noch relativ flüssige Gips seitlich aus der Form herausläuft. Eine entsprechende seitliche Umrandung kann auch für das Angießen des Sockels an die Vorrichtung angeformt sein. Dies ist jedoch nicht unbedingt erforderlich, sofern eine entsprechende Gipsform für den Sockel verwendet wird, deren Wandung bis an den Boden der Vorrichtung heranreicht.

Die Querschnittsform der Führungselemente ist prinzipiell beliebig wählbar. Es hat sich jedoch herausgestellt, dass ein kreisförmiger Querschnitt der konusförmig nach oben schmal zusammenlaufenden Führungselemente besonders vorteilhaft ist, da hierfür sehr leicht entsprechend geformte Hülsen produzierbar sind. Es ist jedoch ebenfalls möglich, im Querschnitt rechteckige oder ovale Führungselemente vorzusehen. Sofern rechteckige oder ovale bzw. elliptische Führungselemente vorgesehen werden, so kann deren Ausrichtung über die Fläche des Bodens der Vorrichtung zwischen dem vorderen und hinteren Bereich der Bodenfläche variieren. So ist es ebenfalls vorteilhaft möglich, dass im vorderen Schneidezahnbereich lange querstehende Stege als Führungselemente verwendet werden, wohingegen im hinteren, die Seiten- und Backenzähne haltenden Bereich der Vorrichtung die schmalen, als Wände ausgebildeten Führungselemente, quer oder schräg zur Zahnleiste ausgerichtet sind. Die Höhe der Führungselemente kann ebenfalls zwischen dem vorderen und hinteren Bereich unterschiedlich ausgebildet sein. angeformt sein. Dies ist jedoch nicht unbedingt erforderlich, sofern eine entsprechende Gipsform für den Sockel verwendet wird, deren Wandung bis an den Boden der Vorrichtung heranreicht.

In einer vorteilhaften Ausführungsform weist die erfindungsgemäße Vorrichtung im vorderen Bereich, welcher den vorderen Bereich des Zahnkranzes inkl. der Schneidezähne hält, kurze und dünne Führungselemente auf, die enger beabstandet zueinander sind als die etwas längeren und im Durchmesser dickeren Führungselemente des hinteren Bereichs, welcher die Backenzähne des Zahnkranzes hält. Die Querschnittsform der Führungselemente ist prinzipiell beliebig wählbar. Es hat sich jedoch herausgestellt, dass ein kreisförmiger Querschnitt der konusförmig nach oben schmal zusammenlaufenden Führungselemente besonders vorteilhaft ist, da hierfür sehr leicht entsprechend geformte Hülsen produzierbar sind. Es ist jedoch ebenfalls möglich, im Querschnitt rechteckige oder ovale Führungselemente vorzusehen. Sofern rechteckige oder ovale bzw. elliptische Führungselemente vorgesehen werden, so kann deren Ausrichtung über die Fläche des Bodens der Vorrichtung zwischen dem vorderen und hinteren Bereich der Bodenfläche variieren. So ist es ebenfalls vorteilhaft möglich, dass im vorderen Schneidezahnbereich lange querstehende Stege als Führungselemente verwendet werden, wohingegen im hinteren, die Seiten- und Backenzähne haltenden Bereich der Vorrichtung die schmalen, als Wände ausgebildeten Führungselemente, quer oder schräg zur Zahnleiste ausgerichtet sind. Die Höhe der Führungselemente kann ebenfalls zwischen dem vorderen und hinteren Bereich unterschiedlich ausgebildet sein.

Nachfolgend werden verschiedene Ausführungsformen der erfindungsgemäßen Vorrichtung anhand von Zeichnungen näher erläutert.

Es zeigen:
- Fig. 1a - d:: Mehrere Ansichten einer ersten Ausführungsform der erfindungsgemäßen Vorrichtung;
- Fig. 2a, 2b:: eine zweite mögliche Ausführungsform der erfindungsgemäßen Vorrichtung mit im Querschnitt rechteckigen Führungselementen;
- Fig. 3a, 3b:: eine dritte mögliche Ausführungsform der erfindungsgemäßen Vorrichtung mit im Querschnitt elliptischen bzw. ovalen Führungselementen;
- Fig. 4a, 4b:: eine vierte mögliche Ausführungsform einer erfindungsgemäßen Vorrichtung mit als Wände ausgebildeten Führungselementen;
- Fig. 5a, 5b:: Formschale für das Herstellen des an die Vorrichtung anzugießenden Sokkels;
- Fig. 6:: eine gemäß der Fig. 1a bis 1d ausgebildete erfindungsgemäße Vorrichtung mit anderer Anordnung der Führungselemente auf dem Boden der Vorrichtung;
- Fig. 7a - 7d:: verschiedene Darstellungen einer erfindungsgemäßen Vorrichtung, wobei auf einige der Führungselemente Hülsen aufgesetzt sind und die erfindungsgemäße Vorrichtung in eine Sokkelformschale eingesetzt ist;
- Fig. 8a, 8b:: perspektivische und Querschnittsdarstellung durch eine Hülse;
- Fig. 9:: Querschnittsdarstellung durch eine erfindungsgemäße Vorrichtung, an deren eine Hälfte eine Sockel und ein Zahnkranz angeformt sind, welche noch nicht getrimmt ist;
- Fig. 10:: eine Seitenansicht eines fertig getrimmten zahntechnischen Modells unter Verwendung der erfindungsgemäßen Vorrichtung
- Fig. 11a und 11b:: erfindungsgemäße zusammenhängende Hülsen als gespritztes Kunststoffteil.

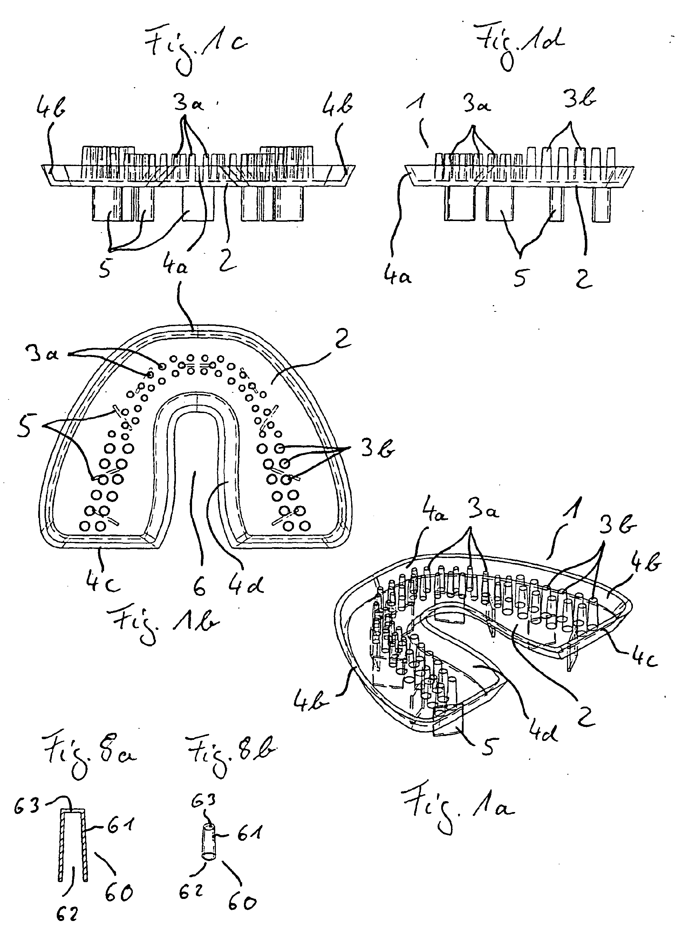

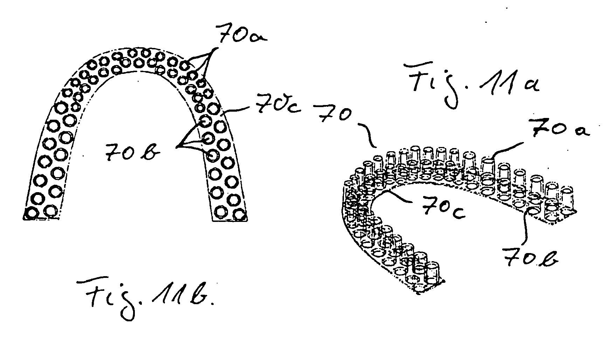

Die Fig. 1a bis 1d zeigen verschiedene Ansichten einer ersten Ausführungsform der erfindungsgemäßen Vorrichtung 1. Die Vorrichtung 1 hat einen Boden 2, auf dessen oberer Seite nebeneinander beabstandet angeordnete Führungselemente 3a und 3b angeordnet sind, die so positioniert sind, dass sie möglichst alle im Bereich des später anzugießenden Zahnkranzes liegen. Die Führungselemente 3a und 3b sind konisch geformt, so dass ein Herausziehen aus dem Material des Zahnkranzes, sofern keine Hülsen verwendet werden, bzw. aus den ebenfalls konisch geformten Hülsen, wie sie in den Fig. 8a und 8b dargestellt sind, leicht möglich ist. An der Unterseite des Bodens 2 sind Vorsprünge 5 angeformt, die zur Verankerung in einem anzugießenden Sockel 9, wie er in den Fig. 9 und 10 dargestellt ist, dienen. Die Vorsprünge 5 können Hinterschneidungen zur noch bessern Verankerung des Sockels 9 aufweisen. Der Boden 2 hat eine seitliche Umrandung 4a, 4b, 4c und 4d, welche leicht schräg nach außen gerichtet ist, so dass ein Abziehen des angeformten Zahnkranzmodells möglich ist. Zwischen den Führungselementen 3a und 3b und der seitlichen Wandung 4a und 4b, 4c und 4d kann ein Bereich ohne Führungselemente vorgesehen werden, so dass nach dem Herstellen des zahntechnischen Modells abschließend dieses auf eine selbst zu wählenden Form getrimmt bzw. geschliffen werden kann, ohne dass dabei Führungselemente sichtbar werden.

Wie aus den Fig. 1c und 1d, welche seitliche Darstellungen der Vorrichtung 1 darstellen, hervorgeht, sind die Führungselemente 3a, welche im vorderen Bereich der Vorrichtung 1 angeordnet sind, von der Höhe her kleiner als die im hinteren Bereich angeordneten Führungselemente 3b. Dies dient der besseren und stabileren Verankerung der aus Gips geformten Zahnleiste, wie sie in Fig. 9 und 10 dargestellt sind. Der Durchmesser der Führungselemente 3b im hinteren Teil der Vorrichtung 1 ist dicker gewählt als der Durchmesser der vorderen Führungselemente 3a. Durch den kleineren Durchmesser der Führungselemente 3a im vorderen Bereich können diese mit geringerem Abstand zueinander auf der Bodenplatte 2 angeordnet werden. Da der Zahnkranz in der Regel zwischen den einzeln abgebildeten Zähnen zersägt wird, sind auch die relativ kleinen Teilbereiche, welche die vorderen Schneidezähne halten, des vorderen Bereichs des Zahnkranzes, durch die dünnen und dicht zueinander beabstandeten Führungselemente 3a sicher gehalten. Dagegen sind die auseinandergesägten Teilbereiche des hinteren Bereichs des Zahnkranzes, welche die Seiten- und Backenzähne halten, in der Regel größer und höher, so dass eine bessere Verankerung und Führung dieser Teilbereiche durch die höheren und im Durchmesser dickeren Führungselemente 3b gegeben ist.

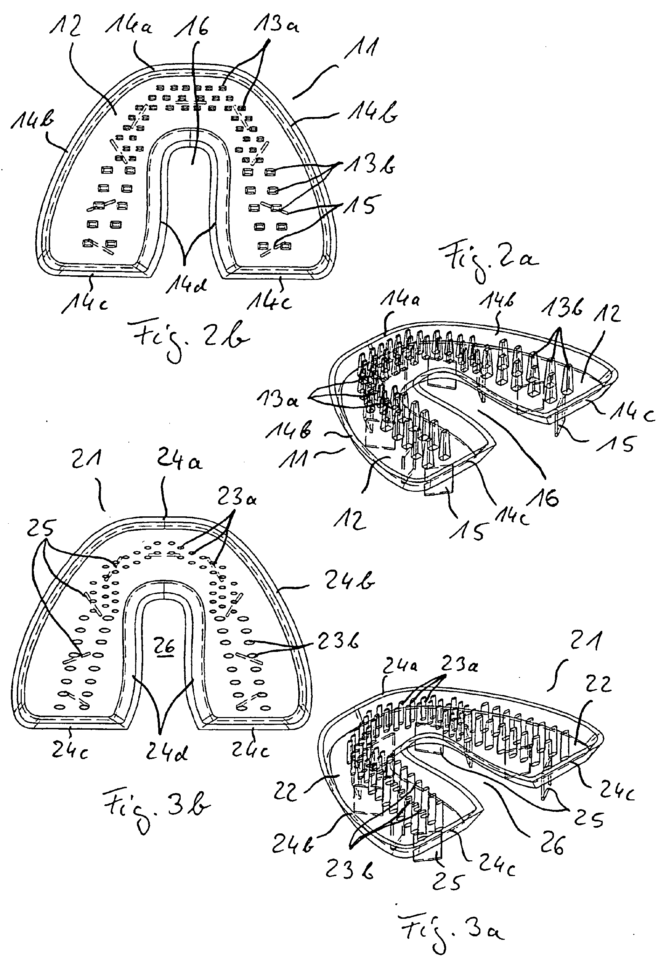

Fig. 2a und 2b zeigen eine weitere Ausführungsform der erfindungsgemäßen Vorrichtung 11 mit einer Bodenplatte 12 und daran angeformten Führungselementen 13a und 13b, sowie einer seitlichen Umrandung 14a, 14b, 14c und 14d sowie an der Unterseite angeformte Vorsprünge 15 zur Verankerung des Sockels. Ebenso wie die Vorrichtung 1 gemäß der Fig. 1a bis 1d weist die Vorrichtung 11 der Fig. 2a und 2b eine Aussparung 16 auf, durch die der Gaumenbereich des darzustellenden Kiefers ausformbar bzw. modellierbar ist. Die Führungselemente 13a und 13b weisen eine rechteckige Querschnittsform auf und laufen konisch zu ihrem freien Ende hin zusammen, damit die entsprechend geformten Hülsen paßgenau aufsetzbar und leicht abnehmbar sind.

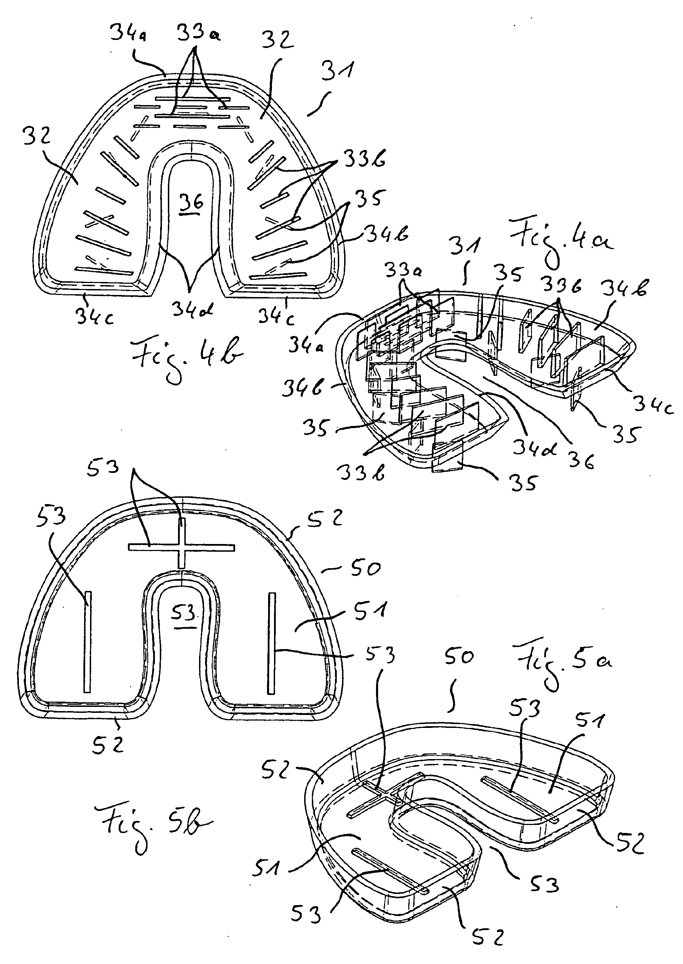

Fig. 3a und 3b zeigen eine weitere mögliche Ausführungsform der erfindungsgemäßen Vorrichtung 21, wobei die Bezugszeichen ähnlich gewählt sind wie bei den vorgenannten Ausführungsformen und die sich nur dadurch von den vorgenannten Ausführungsformen unterscheiden, dass die Querschnittsform der Führungselemente 23a und 23b oval bzw. elliptisch sind.

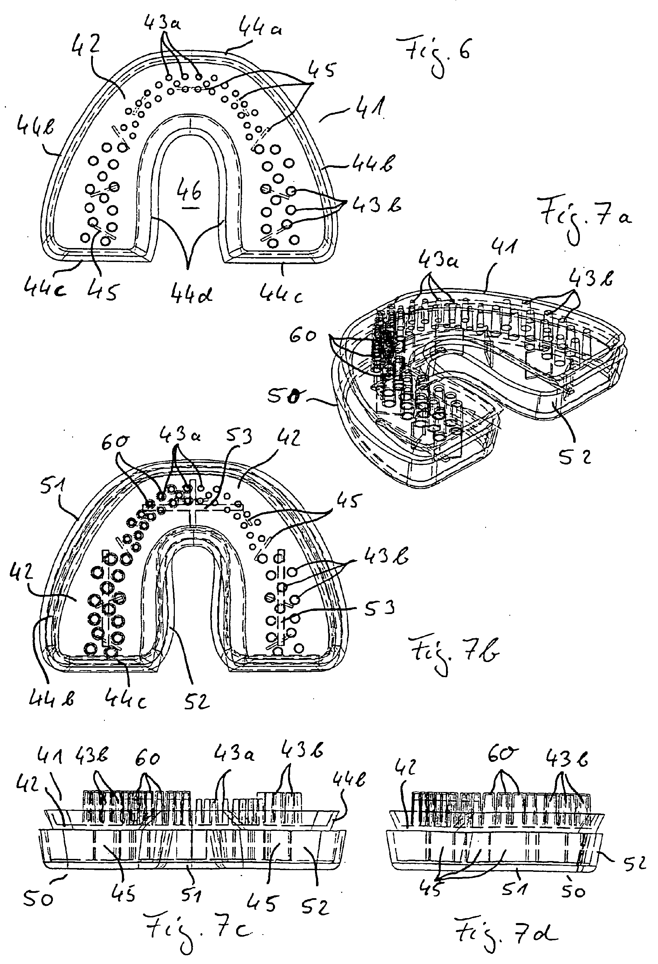

Die Fig. 4a und 4b zeigen eine weitere mögliche Gestaltung der Ausführungsform der erfindungsgemäßen Vorrichtung 31, bei der die Führungselemente 33a und 33b konisch nach oben zusammenlaufende Wandelemente sind, die verschieden lang und in unterschiedlichen Winkeln zueinander angeordnet sind. Die Wände 33a und 33b sind derart angeordnet, dass sie in etwa quer zur Erstreckung des Zahnkranzes ausgerichtet sind. Sie sollten jedoch im Winkel zur Trennlinie der einzelnen zersägten Bereiche des Zahnkranzes angeordnet sein, so dass die einzelnen Teilbereiche des Zahnkranzes im aufgesteckten Zustand sicher auf der Vorrichtung 31 gehalten sind.

Es ist selbstverständlich möglich, die wandförmig ausgebildeten Vorsprünge 5, 15, 25 und 35 der vorgenannten erfindungsgemäßen Vorrichtungen in beliebiger Form auszubilden. Es muss lediglich sichergestellt sein, dass der Sockel fest an den Vorrichtungen 1, 11, 21, 31 verankerbar ist.

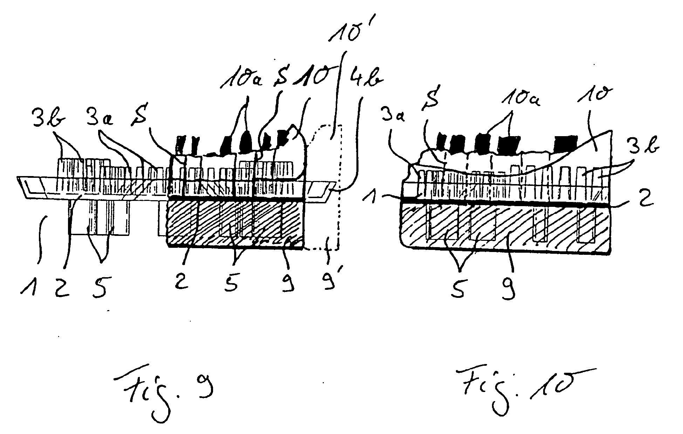

Fig. 5a und 5b zeigen eine Formschale 50 für das Ausformen bzw. Anformen des Sockels an die erfindungsgemäße Vorrichtung. Die Formschale 50 hat in etwa die Form der erfindungsgemäßen Vorrichtung, wobei sie von ihren Abmessungen eher etwas größer zu wählen ist, damit gewährleistet ist, dass an die gesamte Unterseite der Vorrichtung ein aushärtbares Material anformbar ist. Hierzu weist die Schale 50 einen Boden 51 mit einer umlaufenden Umrandung 52 auf. Ein zu den Ausbuchtungen 6, 16, 26 und 36 entsprechend geformte Ausbuchtung 53 ist ebenfalls vorhanden, muß aber nicht vorhanden sein. Ferner weist der Boden an seiner Oberseite längliche Vorsprünge 53 auf, die entsprechend Ausnehmungen an der Unterseite des angeformten Sockels bilden, so dass der Sockel stets in einer bestimmte Position auf einer nicht dargestellten weiteren Haltevorrichtung positioniert werden kann.

Fig. 6 zeigt eine weitere mögliche Abänderung der aller vorgenannten Ausführungsformen und soll lediglich verdeutlichen, dass die Führungselemente 43a und 43b, welche stellvertretend für sämtliche in den vorgenannten Ausführungsformen gewählten Querschnittsformen von Führungselementen stehen, in unterschiedlichen Abständen und in unterschiedlichen Anordnungen zueinander angeordnet werden können.

Fig. 7a bis 7d zeigen die erfindungsgemäßen Vorrichtung 41 gemäß der Fig. 6, wobei auf die Führungselemente 43a und 43b der linken Seite der Vorrichtung 41 den Führungselementen entsprechend geformte Hülsen 60 aufgesetzt sind. Die Vorrichtung 41 selbst ist in eine Schale 50 zum Anformen des Sockels gesetzt, wobei zu erkennen ist, dass die Höhe der Vorsprünge 45 ungefähr der Höhe der Umrandung 52 der Schale 50 entspricht, so dass beim Anformen des Sockels kein Material seitlich herausgedrückt wird. Die Hülsen 60, welche auf die Führungselemente 43a und 43b aufgesetzt sind, verbleiben in dem ausgehärteten Material des Zahnkranzes und dienen als Lagerbuchsen für den Zahnkranz. Die Hülsen sind vorzugsweise aus einem Metall und sehr dünnwandig hergestellt, so dass auch Hülsen, welche im Zwischenbereich von Zähnen des Zahnkranzes einliegen, beim Zersägen des Zahnkranzes leicht mit zersägt werden können. Aufgrund der Vielzahl der Führungselemente ist auch bei teilweise zersägten Hülsen eine sichere Führung und Halterung der einzelnen Teilabschnitte des Zahnkranzes später gesichert.

Fig. 9 zeigt die erfindungsgemäße Vorrichtung 1, an deren rechten Bereich bereits ein Sockel 9 an die Unterseite des Bodens 2 angeformt ist. Die Vorsprünge 5 sind vollständig vom Material des Sockels 9 umgeben. Auf der Oberseite des Bodens 2 ist ebenfalls im rechten Teil der Zahnkranz 10 mit den Zähnen 10a angeformt bzw. aufgesetzt, wobei der Zahnkranz 10 bereits zersägt ist. Die Sägelinien sind durch das Bezugszeichen S gekennzeichnet. Es ist selbstverständlich möglich, den Zahnkranz auf der erfindungsgemäßen Vorrichtung, an die bereits ein Sockel angegossen ist, zu zersägen. Es ist jedoch auch möglich, dass der Zahnkranz abgenommen und dann zersägt wird. Rechts an der Vorrichtung ist ein überschüssiger Sockelbereich 9' und ein überschüssiger Zahnkranzbereich 10' gestrichelt dargestellt, welcher im abschließenden Trimmungsprozeß abgeschliffen wird, wodurch das zahntechnische Modell seine endgültigen Kontur erhält.

Fig. 10 zeigt eine seitliche Darstellung eines fertigen zahntechnischen Modells mit Sockel 9, Vorrichtung 1 mit Bodenplatte 2 und daran angeformten Führungselementen 3a, 3b sowie Vorsprüngen 5 und aufgesetztem Zahnkranz 10 mit Zähnen 10a.

Es ist selbstverständlich, daß für die Herstellung eines Unterkieferzahnkranzes die Aussparungen 6, 16, 26, 36 und 46 entfallen können. Die hintere Wandung 4c, 14c, 24c, 34c und 44c ist dann vorzugsweise gerade und durchgehend ausgestaltet. Es ist somit möglich, Vorrichtungen für den Unterkiefer- sowie Oberkieferzahnkranz bereitzustellen, wodurch die Herstellung der zahntechnischen Modelle noch weiter vereinfacht wird.

Die Figuren 11a und 11b zeigen ein gespritztes Kunststoffteil 70, bei dem Hülsen 70a, 70b auf einem Träger 70c angeordnet sind. Das Kunststoffteil 70 wird in einem Herstellungsprozeß hergestellt, wobei die einzelnen Hülsen 70a, 70b entsprechend der Anordnung und Größe der korrespondierenden Führungselemente der erfindungsgemäßen Vorrichtung ausgestaltet sind. Es ist somit nicht erforderlich vor dem Eindrücken der Vorrichtung in den noch weichen Gips die Hülsen einzeln auf die Führungselemente aufzusetzen. Vielmehr kann dies in einem Arbeitsschritt leicht, problemlos und schell erfolgen. Das Kunststoffteil 70 läßt sich problemlos mit zersägen, so daß der gegipste Zahnkranz mit einliegendem Kunststoffteil ebenfalls leicht zersägbar ist. Durch die zusammenhängenden Hülsen wird zudem der Schrumpfungsprozeß beim Aushärten des Gipses positiv beeinflußt, so daß sich vorteilhaft wenn überhaupt nur ein geringer Verzug des fertigen zahntechnischen Modells ergibt. Es ist selbstverständlich möglich, die zusammenhängenden Hülsen aus einem anderen Material als Kunststoff herzustellen.

Aufgrund der detaillierten Beschreibung der möglichen Ausgestaltungen der erfindungsgemäßen Vorrichtung sind bereits die wesentlichen Verfahrensschritte zur Herstellung eines zahntechnischen Modells unter Verwendung der erfindungsgemäßen Vorrichtung deutlich geworden. Es kann darauf verzichtet werden, die Verfahrensschritte im einzelnen zu erläutern, da sie sich aus dem technischen Aufbau der Vorrichtung selbst ergeben.

## Patentansprüche

1. Vorrichtung (1, 11, 21, 31, 41) zur Halterung eines zahntechnischen Modells (10) eines Zahnkranzes oder eines Abschnitts eines Zahnkranzes, mit mehreren an einer ersten Seite des Bodens (2, 12, 22, 32, 42) der Vorrichtung (1, 11, 21, 31, 41) angeordneten Führungselementen (3a,3b; 13a,13b; 23a,23b; 33a,33b; 43a,43b) zur Halterung
und Führung des Modells (10) oder Einzelteile des Modells, wobei die Vorrichtung (1, 11, 21, 31, 41) an seiner der ersten Seite abgewandten zweiten Seite des Bodens (2, 12, 22, 32, 42) mindestens einen Vorsprung (5, 15, 25, 35, 45) zur Verankerung in einer aushärtbaren Masse hat, welche den Sockel (9) des zahntechnischen Modells (10) bildet, **dadurch gekennzeichnet, dass** die Durchmesser der Führungselemente (3a,3b; 13a,13b; 23a,23b; 33a,33b; 43a,43b) im Bereich der Vorrichtung (1,11,21,31,41), der den vorderen Teil des Zahnkranzes trägt, kleiner ist als die Durchmesser der Führungselemente (3a,3b; 13a,13b; 23a,23b; 33a,33b; 43a,43b) der Bereiche der Vorrichtung (1, 11, 21, 31, 41), die die hinteren Teile des Zahnkranzes tragen.

2. Vorrichtung (1, 11, 21, 31, 41) nach Anspruch 1, **dadurch gekennzeichnet, dass** die Führungselemente (3a,3b; 13a, 13b; 23a,23b; 33a,33b; 43a,43b) nebeneinander stehende, konisch ausgebildete Stifte sind, die in den Bereichen der Zähne (10a) des Zahnkranzes (10) auf dem Boden (2, 12, 22, 32, 42) der Vorrichtung (1, 11, 21, 31, 41) angeordnet sind.

3. Vorrichtung (1, 11, 21, 31, 41) nach Anspruch 2, **dadurch gekennzeichnet, dass** die Stifte einen kreisförmigen, ovalen oder rechteckigen Querschnitt haben.

4. Vorrichtung (1,11,21,31,41) nach Anspruch 2 oder 3, **dadurch gekennzeichnet, dass** die Anzahl der Führungselemente (3a,3b; 13a,13b; 23a,23b; 33a,33b; 43a,43b) pro Flächeneinheit, die auf dem Boden (2, 12, 22, 32, 42) der Vorrichtung (1, 11, 21, 31, 41) verteilt angeordnet sind, variiert.

5. Vorrichtung (1, 11, 21, 31, 41) nach Anspruch 4, **dadurch gekennzeichnet, dass** die Zahl der Führungselemente (3a,3b; 13a,13b; 23a,23b; 33a,33b; 43a,43b) pro Flächeneinheit im Bereich, der den vorderen Teil des Zahnkranzes trägt höher ist als in den Bereichen, die die hinteren Teile des Zahnkranzes tragen

6. Vorrichtung (1, 11,21, 31,41) nach einem der vorhergehenden Ansprüche, **dadurch gekennzeichnet, dass** die äußeren Konturen der Vorrichtung (1, 11, 21, 31, 41) im wesentlichen der Gaumen- bzw. Mundform angepasst sind, derart, dass die Vorrichtung (1, 11, 21, 31, 41) insbesondere u-, v-bzw. c-förmig ist.

7. Vorrichtung (1, 11,21, 31,41) nach einem der vorhergehenden Ansprüche, **dadurch gekennzeichnet, dass** die Vorrichtung (1, 11,21, 31,41) eine Aussparung (6, 16,26, 36,46) im Bereich des Gaumens hat und/oder die Form des Bodens nebst Wandung der Form eines Unter- oder Oberkiefers angepasst ist.

8. Vorrichtung (1, 11, 21, 31, 41) nach einem der vorhergehenden Ansprüche, **dadurch gekennzeichnet, dass** die Vorrichtung (1, 11, 21, 31, 41) an ihrer äußeren Kante eine umlaufende Wandung (4, 14, 24, 34, 44) hat.

9. Vorrichtung (1, 11, 21, 31, 41) nach Anspruch 8, **dadurch gekennzeichnet, dass** die Wandung (4, 14, 24, 34, 44) leicht schräg nach außen von der Vorrichtung (1, 11, 21, 31, 41) weg geneigt ist.

10. Vorrichtung (1, 11, 21, 31, 41) nach einem der Ansprüche 8 oder 9, **dadurch gekennzeichnet, dass** die Höhe der Wandung (4, 14, 24, 34, 44) kleiner ist als die Höhe der Führungselemente (3a,3b; 13a,13b; 23a,23b; 33a, 33b; 43a,43b).

11. Vorrichtung (1, 11, 21, 31, 41) nach einem der Ansprüche 8 bis 10, **dadurch gekennzeichnet, dass** zwischen den äußeren Führungselementen (3a,3b; 13a,13b; 23a,23b; 33a,33b; 43a,43b) und der Wandung (4, 14, 24, 34, 44) ein freier Bereich ohne Führungselemente (3a,3b; 13a,13b; 23a,23b; 33a,33b; 43a,43b) ist, wobei die äußeren Führungselemente (3a,3b; 13a,13b; 23a,23b; 33a,33b; 43a,43b) so angeordnet sind, dass sie nicht außerhalb des zu erstellenden Modells (10) des Zahnkranzes liegen.

12. Vorrichtung (1, 11,21, 31,41) nach einem der vorhergehenden Ansprüche, **dadurch gekennzeichnet, dass** die inneren und/oder vorderen Führungselemente (3a, 13a, 23a, 33a, 43a) kürzer sind als die äußeren und/oder hinteren, dichter zur Wandung (4, 14, 24, 34, 44) angeordneten Führungselemente (3b, 13b, 23b, 33b, 43b).

13. Vorrichtung (1, 11,21, 31,41) nach einem der vorhergehenden Ansprüche, **dadurch gekennzeichnet, dass** die Vorsprünge Hinterschneidungen aufweisen.

14. Vorrichtung (1, 11, 21, 31, 41) nach einem der vorhergehenden Ansprüche, **dadurch gekennzeichnet, dass** an die zweite Seite des Bodens (2, 12, 22, 32, 42) ein Sockel (9), insbesondere aus Gips, angegossen ist, in dem insbesondere ein Magnet oder eine Metallplatte eingegossen ist.

15. Vorrichtung (1, 11,21, 31,41) nach einem der vorhergehenden Ansprüche, **dadurch gekennzeichnet, dass** die Vorrichtung (1, 11, 21, 31, 41) mit daran angeformten Führungselementen (3a,3b; 13a,13b; 23a,23b; 33a,33b; 43a,43b) und Vorsprüngen (5, 15, 25, 35, 45) aus einem spritzgußtechnisch zu verarbeitendem Material, insbesondere Kunststoff, ist.

16. Vorrichtung (1, 11, 21, 31, 41) nach einem der vorhergehenden Ansprüche, **dadurch gekennzeichnet, dass** auf den Führungselementen (3a,3b; 13a,13b; 23a,23b; 33a,33b; 43a,43b) aus dünnem Material bestehende Hülsen (60) aufgeschoben sind, die nach dem Anfertigen des Modells im Zahnkranzmodell (10) verbleiben.

17. Verfahren zur Herstellung eines zahntechnischen Modells eines Zahnkranzes (10) oder eines Abschnitts eines Zahnkranzes (10) unter Verwendung einer Vorrichtung (1, 11, 21, 31, 41) nach einem der vorhergehenden Ansprüche, **dadurch gekennzeichnet, dass** in einem ersten Verfahrensschritt der vom Kiefer entnommene Abdruck ausgegossen wird, und dass danach die Vorrichtung (1, 11, 21, 31, 41) mit ihren Führungselementen (3a,3b; 13a, 13b; 23a,23b; 33a,33b; 43a,43b) in die noch nicht ausgehärtete Masse (10, 10') eingedrückt wird.

18. Verfahren nach Anspruch 17, **dadurch gekennzeichnet, dass** in einem zweiten Verfahrensschritt der Sockel (9) an die zweite Seite des Bodens (2, 12, 22, 32, 42) der Vorrichtung angegossen wird.

19. Verfahren nach Anspruch 17, **dadurch gekennzeichnet, dass** vor dem Eindrücken der Vorrichtung (1, 11, 21, 31, 41) Hülsen (60) auf die Führungselemente (3a,3b; 13a,13b; 23a,23b; 33a,33b; 43a,43b) aufgeschoben werden, die nach dem Aushärten der Masse (10, 10') im Modell verbleiben.

20. Verfahren nach Anspruch 18 oder 19, **dadurch gekennzeichnet, dass** erster und zweiter Verfahrensschritt in beliebiger Reihenfolge durchgeführt werden.

21. Verfahren nach Anspruch 20, **dadurch gekennzeichnet, dass** nach Durchführung der beiden Verfahrensschritte das Modell (10) getrimmt wird, wobei hierzu insbesondere die Wandung (4, 14, 24, 34, 44) der Vorrichtung (1, 11, 21, 31, 41) zusammen mit der daran angegossenen Masse (10') abgeschliffen wird, insbesondere derart, dass ein repräsentatives Modell entsteht.

22. Verfahren nach einem derAnsprüche 18 bis 22, **dadurch gekennzeichnet, dass** der gegossene und ausgehärtete Zahnkranz (10) in Einzelelemente zersägt wird.

23. Zahntechnisches Modell (9,10) unter Verwendung der Vorrichtung nach einem der Ansprüche 1 bis 16, **dadurch gekennzeichnet, dass** im Material des Zahnkranzes (10) Hülsen (60) eingegossen sind, die von der Vorrichtung (1, 11, 21, 31, 41) in das noch formbare Material (10) eingedrückt sind, wobei an der Unterseite des Bodens (2, 12, 22, 32, 42) der Vorrichtung (1, 11, 21, 31, 41) ein Sockel (9) vorzugsweise aus Gips, angegossen ist.

## Claims

1. A device (1, 11, 21, 31, 41) for holding a dental model (10) of a dental arch or a portion of a dental arch, comprising a plurality of guide elements (3a, 3b; 13a, 13b; 23a, 23b; 33a, 33b; 43a, 43b) arranged at a first side of the bottom (2, 12, 22, 32, 42) of the device (1, 11, 21, 31, 41) for holding and guiding the model (10) or individual parts of the model, wherein at its second side of the bottom (2, 12, 22, 32, 42) remote from the first side the device (1, 11, 21, 31, 41) has at least one projection (5, 15, 25, 35, 45) for anchoring in a hardenable material which forms the base (9) of the dental model (10), **characterised in that** the diameters of the guide elements (3a, 3b; 13a, 13b; 23a, 23b; 33a, 33b; 43a, 43b) in the region of the device (1, 11, 21, 31, 41) which carries the front part of the dental arch are smaller than the diameters of the guide elements (3a, 3b; 13a, 13b; 23a, 23b; 33a, 33b; 43a, 43b) of the regions of the device (1, 11, 21, 31, 41) which carry the rear part of the dental arch.

2. A device (1, 11, 21, 31, 41) according to claim 1 **characterised in that** the guide elements (3a, 3b; 13a, 13b; 23a, 23b; 33a, 33b; 43a, 43b) are mutually juxtaposed pegs of a conical configuration which are arranged in the regions of the teeth (10a) of the dental arch (10) on the bottom (2, 12, 22, 32, 42) of the device (1, 11, 21, 31, 41).

3. A device (1, 11, 21, 31, 41) according to claim 2 **characterised in that** the pegs are of a circular, oval or rectangular cross-section.

4. A device (1, 11, 21, 31, 41) according to claim 2 or claim 3 **characterised in that** the number of guide elements (3a, 3b; 13a, 13b; 23a, 23b; 33a, 33b; 43a, 43b) per unit of surface area which are arranged distributed on the bottom (2, 12, 22, 32, 42) of the device (1, 11, 21, 31, 41) varies.

5. A device (1, 11, 21, 31, 41) according to claim 4 **characterised in that** the number of guide elements (3a, 3b; 13a, 13b; 23a, 23b; 33a, 33b; 43a, 43b) per unit of surface area in the region which carries the front part of the dental arch is greater than in the regions which carry the rear part of the dental arch.

6. A device (1, 11, 21, 31, 41) according to one of the preceding claims **characterised in that** the external contours of the device (1, 11, 21, 31, 41) are substantially adapted to the palate or mouth shape in such a way that the device (1, 11, 21, 31, 41) is in particular u-, v- or c-shaped.

7. A device (1, 11, 21, 31, 41) according to one of the preceding claims **characterised in that** the device (1, 11, 21, 31, 41) has an opening (6, 16, 26, 36, 46) in the region of the palate and/or the shape of the bottom together with the wall is adapted to the shape of a lower jaw or upper jaw.

8. A device (1, 11, 21, 31, 41) according to one of the preceding claims **characterised in that** the device (1, 11, 21, 31, 41) has a peripherally extending wall (4, 14, 24, 34, 44) at its outer edge.

9. A device (1, 11, 21, 31, 41) according to claim 8 **characterised in that** the wall (4, 14, 24, 34, 44) is slightly obliquely inclined outwardly away from the device (1, 11, 21, 31, 41).

10. A device (1, 11, 21, 31, 41) according to one of claims 8 and 9 **characterised in that** the height of the wall (4, 14, 24, 34, 44) is less than the height of the guide elements (3a, 3b; 13a, 13b; 23a, 23b; 33a, 33b; 43a, 43b).

11. A device (1, 11, 21, 31, 41) according to one of claims 8 to 10 **characterised in that** there is a free region without guide elements (3a, 3b; 13a, 13b; 23a, 23b; 33a, 33b; 43a, 43b) between the outer guide elements (3a, 3b; 13a, 13b; 23a, 23b; 33a, 33b; 43a, 43b) and the wall (4, 14, 24, 34, 44), wherein the outer guide elements (3a, 3b; 13a, 13b; 23a, 23b; 33a, 33b; 43a, 43b) are so arranged that they are not outside the model (10) to be produced of the dental arch.

12. A device (1, 11, 21, 31, 41) according to one of the preceding claims **characterised in that** the inner and/or front guide elements (3a, 13a, 23a; 33a, 43a) are shorter than the outer and/or rear guide elements (3b, 13b, 23b, 33b, 43b) which are arranged closer to the wall (4, 14, 24, 34, 44).

13. A device (1, 11, 21, 31, 41) according to one of the preceding claims **characterised in that** the projections have undercut configurations.

14. A device (1, 11, 21, 31, 41) according to one of the preceding claims **characterised in that** a base (9), in particular of gypsum, is cast to the second side of the bottom (2, 12, 22, 32, 42), in particular a magnet or a metal plate being cast in the base.

15. A device (1, 11, 21, 31, 41) according to one of the preceding claims **characterised in that** the device (1, 11, 21, 31, 41) with guide elements (3a, 3b; 13a, 13b; 23a, 23b; 33a, 33b; 43a, 43b) and projections (5, 15, 25, 35, 45) formed thereon is of a material which is to be processed by an injection moulding procedure, in particular plastic material.

16. A device (1, 11, 21, 31, 41) according to one of the preceding claims **characterised in that** sleeves (60) comprising thin material are pushed on to the guide elements (3a, 3b; 13a, 13b; 23a, 23b; 33a, 33b; 43a, 43b), which sleeves remain in the dental arch model (10) after preparation thereof.

17. A process for the production of a dental model of a dental arch (10) or a portion of a dental arch (10) using a device (1, 11, 21, 31, 41) according to one of the preceding claims, **characterised in that** in a first process step the impression taken from the jaw is filled and that thereafter the device (1, 11, 21, 31, 41) is pressed with its guide elements (3a, 3b; 13a, 13b; 23a, 23b; 33a, 33b; 43a, 43b) into the material (10, 10') when it has not yet hardened.

18. A process according to claim 17 **characterised in that** in a second process step the base (9) is cast on to the second side of the bottom (2, 12, 22, 32, 42) of the device.

19. A process according to claim 17 **characterised in that** before the device (1, 11, 21, 31, 41) is pressed in sleeves (60) are pushed on to the guide elements (3a, 3b; 13a, 13b; 23a, 23b; 33a, 33b; 43a, 43b), which sleeves remain in the model after hardening of the material (10, 10').

20. A process according to claim 18 or claim 19 **characterised in that** the first and second process steps are carried out in any sequence.

21. A process according to claim 20 **characterised in that** after the two process steps have been carried out the model (10) is trimmed, wherein for that purpose in particular the wall (4, 14, 24, 34, 44) of the device (1, 11, 21, 31, 41) together with the material (10') cast thereto is ground away, in particular in such a way that a representative model is produced.

22. A process according to one of claims 18 to 22 **characterised in that** the cast and hardened dental arch (10) is sawn into individual elements.

23. A dental model (9, 10) using the device according to one of claims 1 to 16 **characterised in that** cast in the material of the dental arch (10) are sleeves (60) which are pressed by the device (1, 11, 21, 31, 41) into the material (10) while it is still shapeable, wherein a base (9), preferably of gypsum, is cast on the underside of the bottom (2, 12, 22, 32, 42) of the device (1, 11, 21, 31, 41).

## Revendications

1. Dispositif (1, 11, 21, 31, 41) de support d'un modèle (10) de dentisterie d'une arcade dentaire ou d'une portion d'une arcade dentaire, comportant plusieurs éléments de guidage (3a, 3b; 13a, 13b;, 23a, 23b; 33a, 33b; 43a, 43b) disposés sur une première face du fond (2, 12, 22, 32, 42) du dispositif (1, 11, 21, 31, 41) pour tenir et guider le modèle (10) ou des éléments individuels de celui-ci, le dispositif (1, 11, 21, 31, 41) portant sur la seconde face du fond (2, 12, 22, 32, 42) éloignée de la première, au moins une saillie (5, 15, 25, 35, 45) pour l'ancrage dans une masse durcissable qui constitue le socle (9) du modèle dentaire (10), **caractérisé par le fait que** le diamètre des éléments de guidage (3a, 3b; 13a, 13b;, 23a, 23b; 33a, 33b; 43a, 43b), dans la partie du dispositif (1, 11, 21, 31, 41) qui porte la portion antérieure de l'arcade dentaire est plus petit que le diamètre des éléments de guidage (3a, 3b; 13a, 13b; 23a, 23b; 43a, 43b) dans les parties du dispositif qui portent les portions postérieures de l'arcade dentaire.

2. Dispositif (1, 11, 21, 31, 41) selon la revendication 1, **caractérisé par le fait que** les éléments de guidage (3a, 3b; 13a, 13b;, 23a, 23b; 33a, 33b; 43a, 43b) sont des tiges coniques dressées les unes à côté des autres qui sont disposées sur le fond (2, 12, 22, 32, 42) du dispositif (1, 11, 21, 31, 41) dans les régions des dents (10a) de l'arcade dentaire (10).

3. Dispositif (1, 11, 21, 31, 41) selon la revendication 2, **caractérisé par le fait que** les tiges ont une section transversale circulaire, ovale ou rectangulaire.

4. Dispositif (1, 11, 21, 31, 41) selon la revendication 2 ou 3, **caractérisé par le fait que** le nombre par unité de surface d'éléments de guidage (3a, 3b; 13a, 13b; 23a, 23b; 33a, 33b; 43a, 43b) répartis sur le fond (2, 12, 22, 32, 42) du dispositif (1, 11, 21, 31, 41) varie.

5. Dispositif (1, 11, 21, 31, 41) selon la revendication 4, **caractérisé par le fait que** le nombre par unité de surface d'éléments de guidage (3a, 3b; 13a, 13b;, 23a, 23b; 33a, 33b; 43a, 43b) dans la partie qui porte la portion antérieure de l'arcade dentaire est plus élevé que dans les parties qui portent les portions postérieures de l'arcade dentaire.

6. Dispositif (1, 11, 21, 31, 41) selon une des revendications précédentes, **caractérisé par le fait que** les contours extérieurs du dispositif (1, 11, 21, 31, 41) sont essentiellement adaptés à la forme du palais ou de la bouche, de sorte que le dispositif (1, 11, 21, 31, 41) a essentiellement une forme de u, de v ou de c.

7. Dispositif (1, 11, 21, 31, 41) selon une des revendications précédentes, **caractérisé par le fait que** le dispositif (1, 11, 21, 31, 41) comporte une échancrure (6, 16, 26, 36, 46) dans la région du palais et/ou que la forme du fond et de la paroi est adaptée à la forme d'une mâchoire inférieure ou d'une mâchoire supérieure.

8. Dispositif (1, 11, 21, 31, 41) selon une des revendications précédentes, **caractérisé par le fait que** le dispositif (1, 11, 21, 31, 41) au niveau de son bord extérieur comporte une paroi périphérique (4, 14, 24, 34, 44).

9. Dispositif (1, 11, 21, 31, 41) selon la revendication 8, **caractérisé par le fait que** la paroi (4, 14, 24, 34, 44) est légèrement inclinée en direction de l'extérieur à partir du dispositif (1, 11, 21, 31, 41).

10. Dispositif (1, 11, 21, 31, 41) selon une des revendications 8 ou 9, **caractérisé par le fait que** la hauteur de la paroi (4, 14, 24, 34, 44) est inférieure à la hauteur des éléments de guidage (3a, 3b; 13a, 13b, 23a, 23b; 33a, 33b; 43a, 43b).

11. Dispositif (1, 11, 21, 31, 41) selon une des revendications 8 à 10, **caractérisé par le fait qu'**il existe un espace libre, sans éléments de guidage (3a, 3b; 13a, 13b; 23a, 23b; 33a, 33b; 43a, 43b), entre les éléments de guidage (3a, 3b; 13a, 13b; 23a, 23b; 33a, 33b; 43a, 43b) extérieurs et la paroi (4, 14, 24, 34, 44), les éléments de guidage (3a, 3b; 13a, 13b; 23a, 23b; 33a, 33b; 43a, 43b) extérieurs étant disposés de telle sorte qu'ils ne soient pas situés en dehors du modèle (10) d'arcade dentaire à réaliser.

12. Dispositif (1, 11, 21, 31, 41) selon une des revendications précédentes, **caractérisé par le fait que** les éléments de guidage (3a, 13a 23a, 33a ,43a) intérieurs et/ou antérieurs sont plus courts que les éléments de guidage 3b, 13b, 23b, 33b, 43b) extérieurs et/ou postérieurs disposés plus près de la paroi (4, 14, 24, 34, 44).

13. Dispositif (1, 11, 21, 31, 41) selon une des revendications précédentes, **caractérisé par le fait que** les saillies présentent des contre-dépouilles.

14. Dispositif (1, 11, 21, 31, 41) selon une des revendications précédentes, **caractérisé par le fait qu'**un socle, notamment en plâtre, dans lequel est noyé en particulier un aimant ou une plaque métallique est lié par moulage à la seconde face du fond (2, 12, 22, 32, 42).

15. Dispositif (1, 11, 21, 31, 41) selon une des revendications précédentes, **caractérisé par le fait que** le dispositif (1, 11, 21, 3 1, 41) avec des éléments de guidage (3a, 3b; 13a, 13b; 23a, 23b; 33a, 33b; 43a, 43b) et des saillies (5, 15, 25, 35, 45) attenants est réalisé en un matériau moulable par injection, plus particulièrement en matière plastique.

16. Dispositif (1, 11, 21, 31, 41) selon une des revendications précédentes, **caractérisé par le fait que** sur les éléments de guidage (3a, 3b; 13a, 13b; 23a, 23b; 33a, 33b; 43a, 43b) sont enfilées des douilles (60) en un matériau fin, qui restent prisonnières du modèle d'arcade dentaire (10) après fabrication dudit modèle.

17. Procédé de fabrication d'un modèle de dentisterie d'une arcade dentaire (10) ou d'une portion d'une arcade dentaire(10) faisant usage d'un dispositif (1, 11, 21, 31, 41) selon une des revendications précédentes, **caractérisé par le fait qu'**au cours d'une première étape on remplit de masse moulable l'empreinte prélevée du maxilaire puis on presse le dispositif (1, 11, 21, 31, 41) avec ses éléments de guidage (3a, 3b; 13a, 13b; 23a, 23b; 33a, 33b; 43a, 43b) dans la masse moulable non encore durcie.

18. Procédé selon la revendication 17, **caractérisé par le fait qu'**au cours d'une deuxième étape de procédé on moule le socle (9) sur la seconde face du fond (2, 12, 22, 32, 42) du dispositif.

19. Procédé selon la revendication 17, **caractérisé par le fait qu'**avant de presser le dispositif (1, 11, 21, 31, 41) dans la masse moulable on enfile sur les éléments de guidage (3a, 3b; 13a, 13b; 23a, 23b; 33a, 33b; 43a, 43b) des douilles (60) qui restent prisonnières du modèle après durcissement de la masse (10, 10').

20. Procédé selon la revendication 18 ou 19, **caractérisé par le fait que** les première et seconde étapes sont exécutées dans un ordre indifférent.

21. Procédé selon la revendication 20, **caractérisé par le fait qu'**après exécution des deux étapes de procédé on usine le modèle (10), la paroi (4, 14, 24, 34, 44) du dispositif (1, 11, 21, 31, 41) ainsi que la masse moulée attenante (10') étant polies notamment de manière à obtenir un modèle représentatif.

22. Procédé selon une des revendications 18 à 22, **caractérisé par le fait que** l'on découpe en éléments individuels le moulage d'arcade dentaire durci.

23. Modèle dentaire (9, 10) obtenu par l'utilisation du dispositif selon une des revendications 1 à 16, **caractérisé par le fait que** des douilles (60) sont scellées dans le matériau de l'arcade dentaire (10), lesquelles douilles sont pressées par le dispositif (1, 11, 21, 31, 41) dans le matériau (10) encore malléable, un socle (9), de préférence en plâtre, étant façonné par moulage sur la face inférieure du fond (2, 12, 22, 32, 42) du dispositif (1, 11, 21, 31, 41).
